# EUROPÄISCHE PATENTANMELDUNG

(11) **EP 1 273 853 A2**
(43) Veröffentlichungstag der Anmeldung: **08.01.2003**
(21) Anmeldenummer: 02004461.6
(22) Anmeldetag: 27.02.2002
(51) Int. Cl.: F24H 8/00

(54) **Heizgerät**

(30) Priorität: 03.07.2001 DE 10132206
(71) Anmelder: ROBERT BOSCH GMBH, 70442 Stuttgart (DE)
(72) Erfinder: Kriener, Kilian, 71640 Ludwigsburg (DE)

(57) **Zusammenfassung**

Die Erfindung betrifft ein Heizgerät (1) mit einem durch ein Brennstoff-Luftgemisch gespeisten Brenner (2), mit einer Brennkammer (4) und mit einer Wärmeübertragereinheit (5), in der das Verbrennungsabgas mindestens in einem unteren Leistungsbereich des Heizgeräts (1) unter den Taupunkt von Wasserdampf abkühlt, sowie mit einem Bypaß (15), der die Brennkammer (4) unter Umgehung der Wärmeübertragereinheit (5) mit einer Abgasabführung (14) verbindet. In der Abgasabführung (14) ist stromauf des Bypasses (15) ein Stellglied (16) angeordnet, das in Abhängigkeit seiner Positionierung den Öffnungsquerschnitt der Abgasabführung (14) beeinflußt, wobei das Stellglied (16) in Abhängigkeit eines Temperatursignals betätigt ist. Dieses Temperatursignal korreliert mit der Temperatur im Rücklauf (9) eines Heiznetzes (7), in welches das Heizgerät (1) eingebunden ist.

## Beschreibung

### Stand der Technik

Die Erfindung betrifft ein Heizgerät mit den Merkmalen des Oberbegriffs des Anspruchs 1.

Ein derartiges Heizgerät ist beispielsweise aus der DE 199 12 580 A1 bekannt und weist einen durch ein Brennstoff-Luftgemisch gespeisten Brenner auf und ist mit einer Brennkammer sowie mit einer Wärmeübertragereinheit ausgestattet. In der Wärmeübertragereinheit wird das Verbrennungsabgas zumindest in einem unteren Leistungsbereich des Heizgeräts unter den Taupunkt von Wasserdampf abgekühlt. Des weiteren ist ein Bypaß vorgesehen, der zur Rückerwärmung der in der Wärmeübertragereinheit abgekühlten Verbrennungsabgase auf einen für Kamin- und Außenwandanschluß erforderlichen Wert die Brennkammer unter Umgehung der Wärmeübertragereinheit mit einer Abgasabführung verbindet. Auf diese Weise gelangen heiße Verbrennungsabgase durch den Bypaß in die abgekühlten Verbrennungsabgase, wodurch sich unter Vermischung der Abgase die gewünschte erhöhte Abgastemperatur einstellt.

Bei derartigen, auch als Brennwert-Heizgerät bezeichneten Heizgeräten wird in der Wärmeübertragereinheit die Kondensationswärme des im Verbrennungsabgas enthaltenden Wasserdampfs ausgenutzt, indem die Verbrennungsabgase zumindest in einem unteren Leistungsbereich des Heizgeräts auf einen unter der Taupunkttemperatur von ca. 55° C liegenden Wert abgekühlt werden. Damit die Abgasabführung kondensatfrei bleiben kann, müssen die Verbrennungsabgase nach dem Verlassen des Wärmeübertragers wieder auf eine höhere Temperatur von z.B. 80° C rückerwärmt werden. Die dazu erforderliche Wärmeenergie wird von den über den Bypaß in die Abgasrückführung eingeleiteten heißen Verbrennungsabgasen bereitgestellt.

Um das Mischungsverhältnis zwischen den heißen Verbrennungsgasen aus dem Bypaß und dem kalten Abgasstrom einzustellen, ist in der Abgasabführung stromauf des Bypasses ein Stellglied, z.B. in Form einer Klappe, angeordnet, das in Abhängigkeit seiner Positionierung den Öffnungsquerschnitt der Abgasabführung beeinflußt. In Abhängigkeit von der Stellung dieses Stellglieds verändert sich der Strömungswiderstand für die in Richtung Abgasabführung strömenden Verbrennungsabgase. Wird das Stellglied in Schließrichtung bewegt, erhöht sich der Strömungswiderstand stromauf des Stellglieds, so daß ein entsprechend größerer Anteil an heißen Verbrennungsabgasen über den Bypaß in die Abgasabführung gelangt und die Abgastemperatur entsprechend anhebt. Wird im umgekehrten Fall das Stellglied geöffnet, so wird der Strömungswiderstand stromauf des Stellglieds verringert und eine entsprechend kleinerer Strom von heißen Verbrennungsabgasen gelangt über den Bypaß in die Abgasabführung.

Bei einer komfortablen Ausführung eines solchen Heizgeräts kann in der Abgasabführung stromab des Bypasses ein Temperatursensor angeordnet sein, der mit einem Steuergerät verbunden ist. Dieses Steuergerät ist seinerseits mit einem motorischen Antrieb des Stellglieds verbunden. Das Stellglied kann dann in Abhängigkeit eines vom Temperatursensor generierten Temperatursignals betätigt werden. Zweckmäßig kann hierbei eine temperaturgeführte Regelung der Stellgliedpositionen realisiert werden.

Heizgeräte dieser Art werden üblicherweise in einem Heiznetz verwendet, das beispielsweise zum Beheizen eines Gebäudes dient.

Der hierbei verwendete Temperatursensor ist an oder in der Abgasabführung angeordnet, wobei Verschmutzungen, insbesondere Rußablagerungen, in der Abgasabführung die Funktion des Temperatursensors und somit der Regelung beeinträchtigen können.

### Vorteile der Erfindung

Das erfindungsgemäße Heizgerät mit den Merkmalen des Anspruchs 1 hat demgegenüber den Vorteil, daß eine im Rücklauf eines Heiznetzes vorliegende Temperatur im Dauerbetrieb sehr zuverlässig bestimmt werden kann, ohne daß dazu ein großer Aufwand oder eine intensive Wartung erforderlich ist. Hierdurch wird auf Dauer eine zuverlässige Funktion der Stellgliedpositionierung gewährleistet, wobei der hierfür erforderliche Aufwand, insbesondere Wartungsaufwand, relativ gering ist.

Die Erfindung nutzt dabei die Erkenntnis, daß die Heiznetzrücklauftemperatur in erheblichem Maße die Konzentration des Wasserdampfes im Abgas bestimmt. Je niedriger die Rücklauftemperatur, desto mehr Wasserdampf kann in der Wärmeübertragereinheit auskondensiert werden und um so weniger Kondensat kann sich in der Abgasabführung bilden. Gleichzeitig hängt die Temperatur der abgekühlten Abgase von der Rücklauftemperatur ab. Dementsprechend kann der Rücklauftemperatur eine Stellgliedposition zugeordnet werden, die bei der vorliegenden Rücklauftemperatur eine ausreichende Heißgasströmung durch den Bypaß bewirkt.

Von besonderer Bedeutung ist hierbei eine Ausführungsform, bei der in Abhängigkeit der Rücklauftemperatur ein Abgastemperaturwert ermittelt wird, um dann das Stellglied so zu betätigen, daß die Rückerwärmung der abgekühlten Verbrennungsabgase im wesentlichen auf diesen Abgastemperaturwert erfolgt. Bei dieser Ausführungsform wird berücksichtigt, daß bei Abgasen mit geringem Wasserdampfgehalt eine niedrigere Temperatur ausreicht, um einen Kondensatanfall in der Abgasabführung zu verhindern, während Abgase mit höherem Wasserdampfgehalt auf eine höhere Temperatur rückerwärmt werden müssen, um einen Kondensatanfall in der Abgasabführung zu vermeiden.
Insgesamt ermöglicht diese dynamische Anpassung der Abgastemperatur eine Erhöhung des Wirkungsgrads des Heizgeräts.

Bei einer besonderen Weiterbildung kann ein Steuergerät über entsprechende Antriebsmittel das Stellglied zum Einstellen des dem Rücklauf zugeordneten Temperatursignal zugeordneten Abgastemperaturwerts im Sinne einer Regelung betätigen. Bei dieser Vorgehensweise werden demnach nicht vorbestimmte Stellgliedpositionen, die z.B. empirisch ermittelt und kennfeldmäßig hinterlegt sind, eingestellt, um die gewünschte Abgastemperatur mehr oder weniger zu erzielen, vielmehr wird die Stellgliedposition solange variiert und nachgestellt, bis die geforderte Abgastemperatur vorliegt und erhalten bleibt. Diese temperaturgeführte Regelung führt zu einer Erhöhung des Gesamtwirkungsgrad des Heizgeräts.

Bei einer anderen Ausführungsform werden bei der Ermittlung der einzustellenden Stellgliedposition bzw. des Abgastemperaturwerts die Temperatur der Abgasabführung und/oder die Druckverhältnisse in der Abgasabführung berücksichtigt. Durch die Berücksichtigung dieser Randbedingungen kann der Betrieb des Heizgeräts weiter optimiert werden, um so den Wirkungsgrad des Heizgeräts zusätzlich zu steigern.

### Zeichnungen

Ein bevorzugtes Ausführungsbeipiel des erfindungsgemäßen Heizgeräts ist in der Zeichnung dargestellt und wird im folgenden näher erläutert.

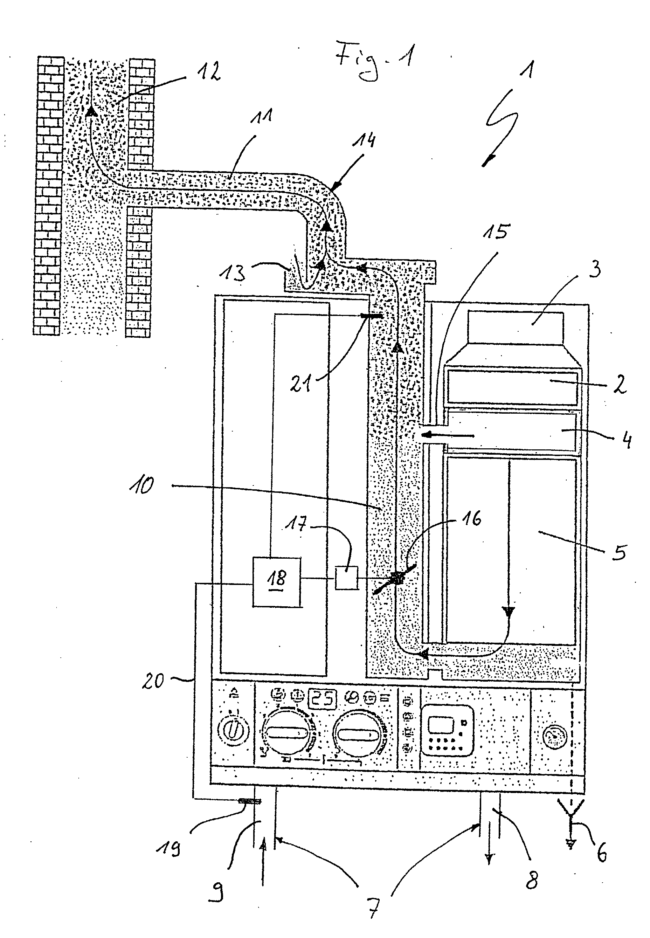

Die einzige Figur 1 zeigt eine vereinfachte Prinzipdarstellung eines Heizgeräts nach der Erfindung.

### Beschreibung des Ausführungsbeispiels

Entsprechend Fig. 1 weist ein Heizgerät 1 nach der Erfindung einen Brenner 2 auf, der über eine Gemischzuführung 3 mit einem Brennstoff-Luftgemisch gespeist wird. In einer Brennkammer 4 erfolgt die Verbrennung des Brennstoff-Luftgesmischs, wobei sich heiße Verbrennungsabgase bilden. Diese heißen Verbrennungsabgase durchlaufen stromab der Brennkammer 4 eine Wärmeübertrageeinheit 5, die beim erfindungsgemäßen Heizgerät 1 als Brennwertzelle ausgebildet ist. Das bedeutet, daß die heißen Verbrennungsabgase in der Wärmeübertragereinheit 5 zumindest in einem unteren Leistungsbereich des Heizungsgeräts 1 unter den Taupunkt von Wasserdampf abgekühlt werden. Dementsprechend kommt es in der Wärmeübertragereinheit 5 zu einer Kondensation des in den Verbrennungsabgasen enthaltenden Wasserdampfs. Das in der Wärmeübertragereinheit 5 anfallende Kondensat wird über eine Kondensatablaufleitung 6 aus dem Heizgerät 1 herausgeführt.

Die Abkühlung der Verbrennungsabgase wird in der Wärmeübertragereinheit 5 dadurch erreicht, daß die Wärmeenergie der Verbrennungsabgase mehr oder weniger auf eine Flüssigkeit, z.B. Wasser, eines Heiznetzes 7 übertragen wird, in welches das Heizgerät 1 eingebunden ist. Dieses Heiznetz 7 dient beispielsweise zur Beheizung eines Gebäudes. Das in der Wärmeübertragereinheit 5 erhitzte Heizwasser tritt durch einen Vorlauf 8 aus dem Heizgerät 1 aus, während das im Heizkreis 7 abgekühlte Heizwasser über einen Rücklauf 9 wieder dem Heizgerät 1 zugeführt wird und zur erneuten Erhitzung in die Wärmeübertragereinheit 5 gelangt.

Stromab der Wärmeübertragereinheit 5 gelangen die abgekühlten Abgase in eine Abgasleitung 10, die über eine Anschlußleitung 11 z.B. mit einem Kamin 12 verbunden sein kann. Am Übergang zwischen Verbindungsleitung 11 und Abgasleitung 10 kann außerdem eine Ansaugöffnung 13 angeordnet sein, über die den Verbrennungsabgasen Luft beigemischt werden kann. Die Abgasleitung 10, die Verbindungsleitung 11 und das Kamin 12 bilden dabei zusammen eine Abgasabführung 14 des Heizgeräts 1.

Die über die Abgasabführung 14 aus dem Heizgerät 1 abgeleiteten Abgase müssen einen Abgastemperaturwert aufweisen, der sicherstellt, daß in der Abgasabführung 14, insbesondere im Kamin 12, kein Kondensat anfallen kann. Da die Temperatur der Abgase nach der Wärmeübertragereinheit 5 regelmäßig zu niedrig ist, um die Abgasabführung 14 kondensatfrei zu halten, müssen die Verbrennungsabgase stromab der Wärmeübertragereinheit 5 rückerwärmt werden. Zu diesem Zweck ist ein Bypaß 15 vorgesehen, durch den heiße Verbrennungsabgase aus der Brennkammer 4 direkt in die Abgasleitung 10 der Abgasabführung 14 überströmen können. Dabei strömen die heißen Abgase unter Umgehung der Wärmeübertragereinheit 5 direkt von der Brennkammer 5 in die Abgasleitung 10. Dadurch erfolgt eine Vermischung der heißen Verbrennungsabgase mit den abgekühlten Verbrennungsabgasen, wodurch sich das Temperaturniveau der Abgase in der Abgasabführung 14 stromab des Bypasses 15 erhöht. Der Bypaßstrom und somit das die Abgastemperatur in der Abgasabführung 14 bestimmende Mischungsverhältnis zwischen heißen Abgasen und abgekühlten Abgasen hängt von den Druckverhältnissen und somit vom Durchströmungswiderstand der abgasführenden Elemente ab. Zur Beeinflussung dieser Druckverhältnisse ist in der Abgasleitung 10 der Abgasabführung 14 stromauf des Bypasses 15 ein Stellglied 16, z.B. in Form eine Klappe oder Drossel, angeordnet, das in Abhängigkeit seiner Position den Öffnungsquerschnitt der Abgasleitung 10 beeinflußt. Bei einer Verstellung in Schließrichtung steigt der Systemdruck stromauf des Stellglieds 16, so daß mehr heiße Abgase durch den Bypaß 15 in die Abgasabführung 14 gelangen. Bei einer Verstellung in Öffnungsrichtung sinkt der Systemdruck stromauf des Stellglieds 16, so daß dementsprechend weniger heiße Abgase durch den Bypaß 15 in die Abgasleitung 10 gelangen.

Das Stellglied 16 ist hier mit Antriebsmitteln 17, z.B. ein Elektromotor, insbesondere Schrittmotor, antriebsgekoppelt, wobei diese Antriebsmittel 17 zu ihrer Betätigung mit einem Steuergerät 18 verbunden sind. Dieses Steuergerät 18 ist mit einem ersten Temperatursensor 19 verbunden, der am oder im Rücklauf 9 des Heiznetzes 7 angeordnet ist und ein mit der Temperatur im Rücklauf 9 korrelierendes Temperatursignal generiert, das über eine Signalleitung 20 dem Steuergerät 18 zugeführt wird. Es ist klar, daß diese Signalleitung 20 auch intern im Heizgerät 1 verlaufen kann. Des weiteren ist bei der hier dargestellten bevorzugten Ausführungsform ein zweiter Temperatursensor 21 vorgesehen, der an oder in der Abgasabführung 14 stromab des Bypasses 15 angeordnet ist. Dieser zweite Temperatursensor 21 kann somit ein zweites Temperatursignal generieren, das mit der Temperatur der rückerwärmten Abgase korreliert und ebenfalls dem Steuergerät 18 zur Verfügung steht.

### Das erfindungsgemäße Heizgerät 1 arbeitet wie folgt:

Das Steuergerät 18 betätigt über die Antriebsmittel 17 das Stellglied 16 in Abhängigkeit des ersten Temperatursignals, also in Abhängigkeit der Rücklauftemperatur. Dabei kann diese Betätigung durch einen einfachen Steuerungsvorgang realisiert sein, d.h. das Steuergerät 18 ordnet dem aktuellen Rücklauftemperatursignal eine Stellgliedposition zu, die über die Antriebsmittel 17 am Stellglied 16 eingestellt wird. Dabei kann die Zuordnung zwischen Rücklauftemperatursignal und Stellgliedposition über eine Berechnung oder durch empirisch ermittelte Wertepaare erfolgen, die beispielsweise in einer Tabelle oder in einem Kennfeld abgelegt sind. Grundsätzlich kann die Zuordnung so erfolgen, daß durch die Stellgliedpositionen stets etwa derselbe Abgastemperaturwert eingestellt werden kann, so daß insoweit ein statischer Betrieb des Heizgeräts 1 vorliegt. Ebenso kann die Zuordnung so erfolgen, daß sich in Abhängigkeit der Rücklauftemperatur unterschiedliche Abgastemperaturen ergeben. Dabei wird die Erkentnis ausgenutzt, daß niedrigere Rücklauftemperaturen zu einem geringeren Wasserdampfgehalt im abgekühlten Abgas führen, so daß in der Abgasabführung 14 weniger Kondensat anfallen kann, mit der Folge, daß auch eine niedrigere Abgastemperatur ausreicht, die Abgasabführung 14 kondensatfrei zu halten. Je niedriger die Rücklauftemperatur, desto weiter ist das Stellglied 16 geöffnet. Insoweit liegt eine dynamische Anpassung der Abgastemperatur an die Rücklauftemperatur vor.

Bei einer anderen Ausführungsform ermittelt die Steuerung 18 in Abhängigkeit der Rücklauftemperatur einen Abgastemperaturwert, der durch die Zumischung der heißen Verbrennungsabgase über den Bypaß 15 erreicht werden muß, um die Abgasabführung 14 kondensatfrei zu halten. Dabei wird wiederum die vorstehend erläuterte Erkenntnis berücksichtigt, daß bei einer geringeren Rücklauftemperatur eine geringere Abgastemperatur ausreicht. Im Unterschied zur vorbeschriebenen Variante erfolgt die Betätigung des Stellglieds 16 bei dieser Variante nicht im Sinne einer Steuerung sondern im Sinne einer Regelung, die durch das am zweiten Temperatursensor 21 generierte Abgastemperatursignal geführt wird. Stellt die Steuerung 18 durch einen geeigneten Soll-Ist-Vergleich fest, daß die Abgastemperatur stromab des Bypasses 15 mehr oder weniger zu hoch ist, betätigt die Steuerung 18 über die Antriebsmittel 17 das Stellglied 16 in entsprechender Weise mehr oder weniger in Öffnungsrichtung. Auf diese Weise kann die gewünschte Abgastemperatur relativ genau eingeregelt und eingehalten werden. Auch bei dieser Variante kann die Zuordnung einer erforderlichen Abgastemperatur zu einer Rücklauftemperatur durch Berechnungen und/oder durch empirisch ermittelten Daten, z.B. in Kennfeldern, erfolgen.

Bei Weiterentwicklungen des vorliegenden Heizgeräts 1 kann das Steuergerät 18 außerdem die Temperatur in der Abgasabführung 14, insbesondere im Kamin 12 und/oder die Druckverhältnisse in der Abgasabführung 14, insbesondere im Kamin 12 berücksichtigen, wobei dann entsprechende Sensoren vorgesehen sind, die mit dem Steuergerät 18 verbunden sind.

Bezugszeichenliste
- 1: Heizgerät
- 2: Brenner
- 3: Gemischzuführung
- 4: Brennkammer
- 5: Wärmeübertragereinheit
- 6: Kondensatablaufleitung
- 7: Heiznetz
- 8: Vorlauf
- 9: Rücklauf
- 10: Abgasleitung
- 11: Verbindungsleitung
- 12: Kamin
- 13: Ansaugöffnung
- 14: Abgasabführung
- 15: Bypaß
- 16: Stellglied
- 17: Antriebsmittel
- 18: Steuergerät
- 19: erster Temperatursensor
- 20: Signalleitung
- 21: zweiter Temperatursensor

## Patentansprüche

1. Heizgerät mit einem durch ein Brennstoff-Luftgemisch gespeisten Brenner (2), mit einer Brennkammer (4) und mit einer Wärmeübertragereinheit (5), in der das Verbrennungsabgas mindestens in einem unteren Leistungsbereich des Heizgeräts (1) unter den Taupunkt von Wasserdampf abkühlt, sowie mit einem Bypaß (15), der die Brennkammer (4) unter Umgehung der Wärmeübertragereinheit (5) mit der Abgasabführung (14) verbindet, wobei in der Abgasabführung (14) stromauf des Bypasses (15) ein Stellglied (16) angeordnet ist, daß in Abhängigkeit seiner Position den Öffnungsquerschnitt der Abgasabführung (14) beeinflußt, wobei das Stellglied (16) in Abhängigkeit eines Temperatursignals betätigt ist,
**dadurch gekennzeichnet, daß** das Temperatursignal mit der Temperatur im Rücklauf eines Heiznetzes (7) korreliert, in welches das Heizgerät (1) eingebunden ist.

2. Heizgerät nach Anspruch 1,
**dadurch gekennzeichnet, daß** ein Steuergerät (18) vorgesehen ist, das über Antriebsmittel (17) das Stellglied (16) zum Einstellen einer dem Rücklauftemperatursignal zugeordneten Stellgliedposition in Abhängigkeit des Rücklauftemperatursignals im Sinne einer Steuerung betätigt.

3. Heizgerät nach Anspruch 1 oder 2,
**dadurch gekennzeichnet, daß** ein Temperatursensor (19) am oder im Rücklauf (9) angeordnet ist, der das mit der Rücklauftemperatur korrelierende Rücklauftemperatursignal generiert.

4. Heizgerät nach einem der Ansprüche 1 bis 3,
**dadurch gekennzeichnet, daß** ein Steuergerät (18) vorgesehen ist, das in Abhängigkeit des Rücklauftemperatursignals einen Abgastemperaturwert ermittelt und das Stellglied (16) so betätigt, daß die Rückerwärmung der abgekühlten Verbrennungsabgase im wesentlichen auf diesen Abgastemperaturwert erfolgt.

5. Heizgerät nach Anspruch 4,
**dadurch gekennzeichnet, daß** das Steuergerät (18) über die Antriebsmittel (17) das Stellglied (16) zum Einstellen des diesem Rücklauftemperatursignal zugeordneten Abgastemperaturwerts im Sinne einer Regelung betätigt.

6. Heizgerät nach Anspruch 5,
**dadurch gekennzeichnet, daß** ein zweiter Temperatursensor (21) vorgesehen ist, der stromab des Bypasses (15) an oder in der Abgasabführung (14) angeordnet ist und ein mit der Abgastemperatur korreliertes zweites Temperatursignal generiert.

7. Heizgerät nach einem der Ansprüche 1 bis 6,
**dadurch gekennzeichnet, daß** ein Steuergerät (18) vorgesehen ist, das bei der Ermittlung der Stellgliedposition und/oder des Abgastemperaturwerts die Temperatur der Abgasabführung (14) und/oder die Druckverhältnisse in der Abgasabführung (14) berücksichtigt.
